Europäisches Patentamt

European Patent Office

Office européen des brevets

(11) Numéro de publication : **0 368 761 B1**

# FASCICULE DE BREVET EUROPEEN

(45) Date de publication du fascicule du brevet :
20.05.92 Bulletin 92/21

(51) Int. Cl.$^5$ : **B60N 2/00**

(21) Numéro de dépôt : **89403088.1**

(22) Date de dépôt : **08.11.89**

(54) **Dispositif de positionnement et de blocage d'une armature de dossier de siège sur une armature d'assise de siège monté enautomatique dans un véhicule.**

(30) Priorité : **10.11.88 FR 8814698**
**26.09.89 FR 8912596**

(43) Date de publication de la demande :
**16.05.90 Bulletin 90/20**

(45) Mention de la délivrance du brevet :
**20.05.92 Bulletin 92/21**

(84) Etats contractants désignés :
**AT BE CH DE ES GB GR IT LI LU NL SE**

(56) Documents cités :
**FR-A- 2 526 289**
**US-A- 3 295 888**
**US-A- 3 989 298**
**US-A- 4 536 031**

(73) Titulaire : **A. & M. COUSIN Etablissements**
**COUSIN FRERES**
**Le Bois de Flers**
**F-61103 Flers Cédex Orne (FR)**

(72) Inventeur : **Droulon, Georges**
**Rue de la Garenne St Georges des Groseillers**
**F-61100 Flers (FR)**
Inventeur : **Pipon, Yves**
**La Garenne St Georges des Groseillers**
**F-61100 Flers (FR)**

(74) Mandataire : **Madeuf, Claude Alexandre Jean et al**
**CABINET MADEUF 3, avenue Bugeaud**
**F-75116 Paris (FR)**

EP 0 368 761 B1

Jouve, 18, rue Saint-Denis, 75001 PARIS

**Description**

Dans la pratique courante, les sièges pour véhicules et, en particulier pour l'automobile, sont composés d'une armature d'assise et d'une armature de dossier que l'on rend solidaires l'une de l'autre par divers moyens tels que soudure, rivetage ou autres. Dans certains cas, il est possible de monter entre l'armature d'assise et l'armature de dossier, des mécanismes de positionnement variable du dossier par rapport à l'assise. Le garnissage du siège est fait ensuite.

Lorsque les deux armatures sont réunies, l'ensemble est très encombrant et lourd et, de ce fait, le montage dans l'habitacle d'un véhicule est toujours fastidieux et nécessite, le plus souvent, l'emploi de deux intervenants. De tels systèmes sont connus par exemple des documents FR-A-2 526 289 et 3 989 298.

On a cherché à automatiser le montage des sièges mais, du fait de l'encombrement et du poids de chacun de ceux-ci, il est nécessaire d'utiliser des moyens complexes pour contourner les difficultés d'introduction dans l'habitacle de ces sièges surtout lorsqu'ils sont équipés d'un appui-tête.

La présente invention tend à remédier à cet inconvénient en partant de l'idée qu'il est normal de séparer l'armature du dossier de l'armature de l'assise qui sera montée seule sur le plancher du véhicule en automatique dans un premier poste de montage de la chaîne. Puis dans un deuxième poste de montage de cette chaîne, on peut automatiquement positionner l'armature du dossier sur l'armature de l'assise soit manuellement soit automatiquement. Il est également possible de réaliser la fixation de l'armature du dossier sur l'armature de l'assise manuellement et sans outil en utilisant des butées prépositionnées.

Conformément à l'invention, le dispositif de positionnement et de blocage d'une armature de dossier de siège sur une armature d'assise de siège monté en automatique dans un véhicule dans lequel les extrémités arrière de l'armature de l'assise du siège considéré comportent des organes de fixations est caractérisé en ce que chaque organe de fixation qui peut être monté sur un mécanisme de réglage de l'inclinaison du dossier est formé d'un boîtier conformé pour recevoir un poignard fixé à chacune des extrémités inférieures de l'armature du dossier, ce poignard étant maintenu dans le boîtier considéré par coincement à l'aide d'une pièce constituée par un galet central strié en son centre et comportant latéralement des prolongements lisses de petits diamètres permettant au galet de tourner fou dans des ouvertures prévues dans le boîtier de façon à être repoussés par au moins un ressort pour le coincement du galet dans chaque coin du poignard et du boîtier considérés.

Diverses autres caractéristiques de l'invention ressortent d'ailleurs de la description détaillée qui suit.

Des formes de réalisation de l'objet de l'invention sont représentées, à titre d'exemples non limitatifs, aux dessins annexés.

La fig. 1 montre, en élévation latérale et partie schématique, la zone de jonction d'une armature de dossier sur une armature d'assise, étant entendu que l'on n'a représenté qu'un côté du siège pour faciliter la compréhension.

La fig. 2 est une élévation de face de l'une des moitiés de l'élément de jonction solidaire d'un demi-boîtier.

La fig. 2a est une vue de dessus correspondant à la fig. 2.

La fig. 3 montre, en élévation de face, l'autre moitié de l'élément de jonction qui est fixé sur l'armature d'assise.

La fig. 3a est une vue de dessus correspondant à la fig. 3.

Les fig. 4, 5 et 6 montrent des moyens de fixation des éléments de jonction formant boîtier sur l'armature de l'assise d'un siège.

La fig. 7 est une vue de face de la pièce solidaire d'une des extrémités de l'armature du dossier destinée à coopérer avec l'élément de jonction formant boîtier des fig. 2 et 3.

La fig. 8 est une élévation de face d'une variante de réalisation de la fig. 7 représentant l'extrémité de l'armature du dossier d'un siège.

La fig. 8a est une vue en coupe longitudinale correspondant à la fig. 8.

La fig. 9 est une élévation latérale montrant une autre variante de réalisation de l'invention.

La fig. 10 est une coupe-élévation partielle du montage de l'armature du dossier sur l'armature de l'assise d'un siège en utilisant la solution de la fig. 9 mais avec incorporation d'un mécanisme de réglage de l'inclinaison du dossier par rapport à l'assise du siège considéré.

La fig. 11 montre un des éléments des fig. 9 et 10 en vue de face.

La fig. 12 montre l'autre élément en vue de face de la fig. 10 solidaire de l'armature d'assise.

Les fig. 13, 14 et 15 montrent une autre variante de réalisation très proche de celle des fig. 9, 10, 11 et 12.

Les fig. 16, 17 et 18 montrent une dernière réalisation comportant de légères variantes de fabrication et qui est très proche de la réalisation des fig. 9 à 12.

La fig. 19 montre de face, la zone de jonction de l'armature du dossier sur l'armature d'assise étant entendu que l'on n'a représenté qu'un côté du siège pour faciliter la compréhension.

La fig. 20 est une coupe, à grande échelle, suivant la ligne II-II de la fig. 19.

La fig. 21 est une coupe suivant la ligne III-III de la fig. 20.

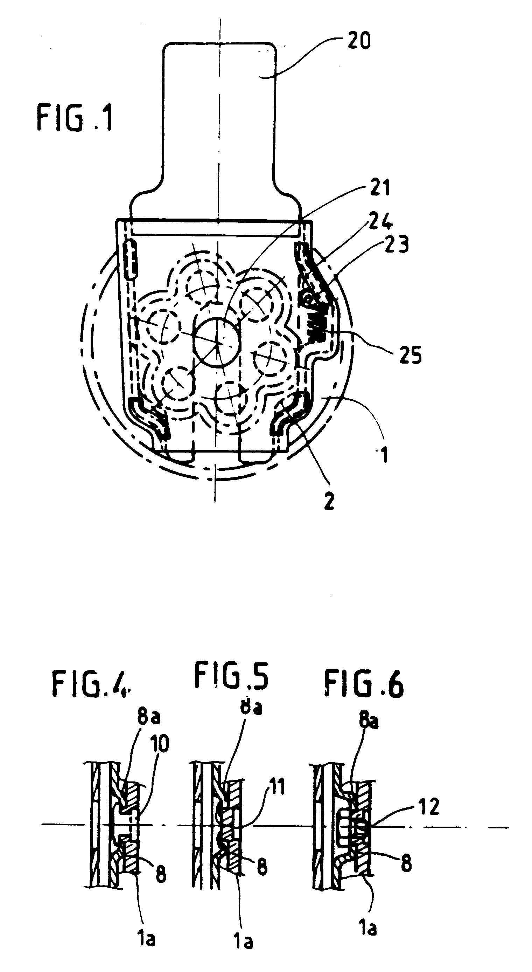

A la fig. 1, on a représenté schématiquement le montage d'un des côtés de l'armature du dossier sur l'armature du siège.

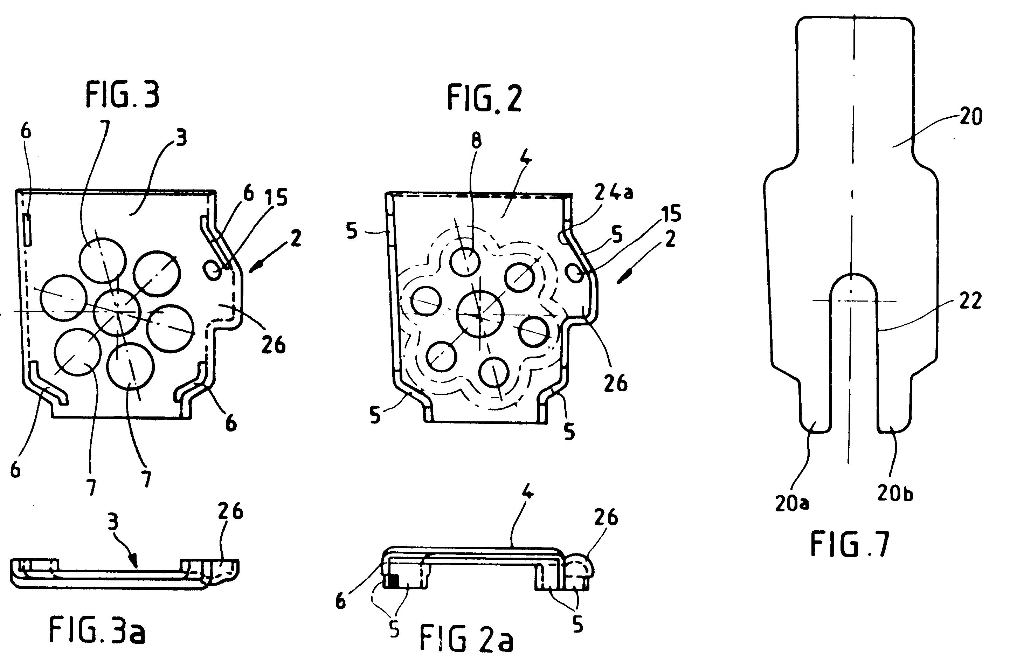

En effet, comme l'on peut s'en rendre compte aisément, le mécanisme 1 de réglage d'inclinaison du dossier par rapport à l'assise du siège qui est fixé sur l'un des côtés de l'armature de l'assise par son côté fixe porte sur son côté mobile un élément de jonction 2 en forme de boîtier (voir fig. 2, 2a, 3, 3a) qui est constitué par deux demi-boîtiers 3, 4 réunis l'un à l'autre par tout moyen convenable tel que soudure ou sertissage de façon que le demi-boîtier 4 soit recouvert par le demi-boîtier 3 par introduction de pattes 5 à l'intérieur d'ouvertures 6 d'un demi-boîtier 3. Le boîtier 2 est alors obtenu par assemblage des deux demi-boîtiers 3, 4 par épanouissement des pattes 5 formant ainsi un rivetage ou par soudure des pattes 5. Le demi-boîtier 3 présente des ouvertures circulaires 7 de grand diamètre permettant le passage d'outils qui viennent ensuite coopérer avec des trous 8 obtenus par découpage dans un embouti 8a afin de réaliser la jonction du boîtier 2 sur le côté mobile 1a du mécanisme de réglage d'inclinaison soit par des rivets 10 (fig. 4), soit par des soudures 11 (fig. 5), soit par des vis à tête 12 (fig. 6). Ainsi, le boîtier 2 est solidement fixé sur la partie mobile du mécanisme de réglage d'inclinaison 1 du dossier du siège et ce travail peut être aisément effectué à l'aide d'une machine automatique.

Aux fig. 4, 5 et 6, la référence 1a désigne une partie coupée d'un flasque d'un mécanisme de positionnement qui sera décrit plus loin.

Il est à noter la présence d'un trou double oblong 15 dont le rôle sera expliqué plus loin.

Lorsque cet ensemble est monté sur l'armature de l'assise du siège de part et d'autre de cette armature, on peut aisément introduire le tout dans l'habitacle d'un véhicule et fixer cet ensemble sur le plancher de ce véhicule car le poids et l'encombrement sont acceptables par les machines usuellement utilisées pour les montages automatiques.

Lorsque ce poste de travail a effectué la fixation de l'assise dans le véhicule et, si nécessaire, à droite et à gauche du véhicule par des machines placées de part et d'autre de la chaîne de montage, on passe au poste suivant dans lequel, après avoir fixé la pièce 20 (fig. 7), qui sera appelée dans ce qui suit poignard, sur les deux extrémités inférieures de l'armature du dossier, on introduit simultanément ces deux poignards 20 dans le boîtier 2 placés de part et d'autre de l'armature de l'assise qui est dorénavant solidaire du plancher du véhicule considéré.

On obtient ainsi le montage représenté à la fig. 1 dans lequel il y a lieu de remarquer que :

a) l'arbre de rotation 21 du mécanisme 1 peut traverser le poignard 20 du fait que celui-ci comporte à sa partie inférieure une ouverture allongée 22,

b) les extrémités inférieures 20a, 20b du poignard 20 sont amincies pour venir se coincer dans la partie inférieure du boîtier 2,

c) il est prévu, passant à travers les trous 15, des parties d'axes 23, ces parties d'axes étant solidaires d'un galet central 24 à surface périphérique striée de plus grand diamètre et qui est monté fou dans les trous oblongs 15. Le galet 24 constitué par les deux prolongements 23 tend à coincer chaque coin du poignard 20 en étant repoussé par un ressort 25 qui repose dans un logement 26 prévu dans chaque demi-boîtier 3, 4. Le coincement de l'axe 23 ainsi obtenu évite les jeux d'avant-arrière du dossier par rapport à l'assise.

On obtient ainsi un blocage permanent et sûr des poignards 20, donc de l'armature de chaque dossier sur l'armature de l'assise du siège considéré par l'intermédiaire des deux mécanismes de réglage d'inclinaison 1 placés de part et d'autre du dossier.

Du fait de l'arbre de rotation 21, on peut avoir une commande des mécanismes 1 soit à droite soit à gauche du siège et, ce, d'une manière classique.

La description qui précède montre donc qu'il est possible, par des moyens simples, de monter automatiquement l'armature du dossier d'un siège sur l'assise de ce siège en deux postes de travail d'une chaîne de montage sans intervention humaine.

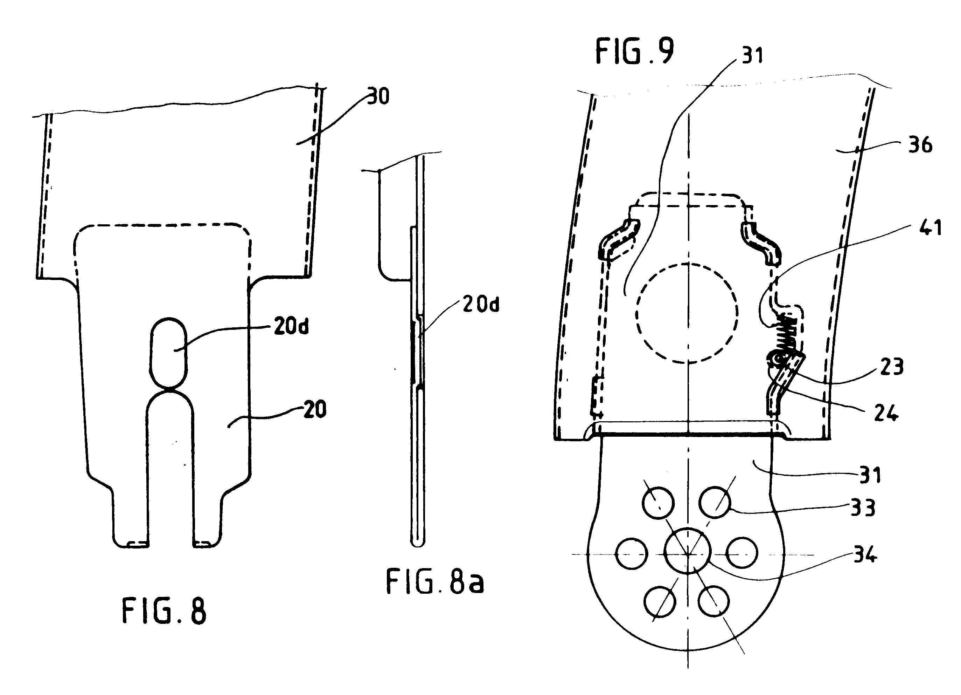

A la fig. 8, le poignard 20 qui est prévu aux extrémités de l'armature 30 d'un dossier de siège est constitué de deux épaisseurs réalisées par découpage et repliage sous presse de la tôle, ces deux épaisseurs étant réunies entre elles par un embouti central 20d.

On peut ainsi utiliser des épaisseurs de tôle très minces se travaillant bien à la presse.

Aux fig. 9, 10, 11 et 12, le poignard désigné par la référence 31 est rendu solidaire de l'armature d'assise 32 par l'intermédiaire d'un mécanisme de réglage d'inclinaison 1 en fixant sur la partie mobile du mécanisme 1, le poignard 31 à l'aide de trous 33 répartis correctement sur un cercle concentrique à un trou 34 permettant le passage de l'arbre de commande de mécanisme 1.

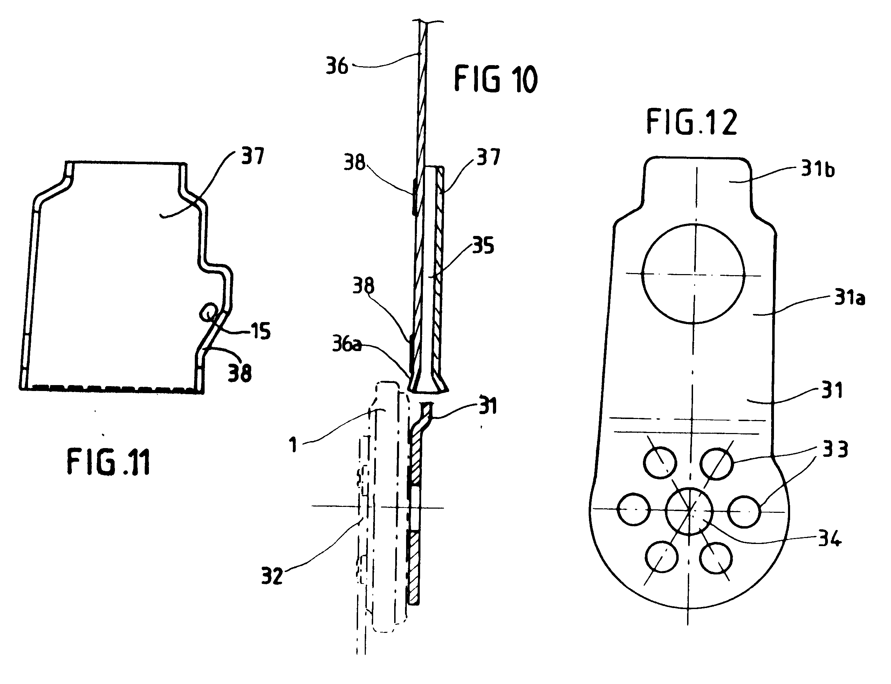

Comme on peut le voir à la fig. 12, le poignard 31 présente une partie supérieure 31a légèrement moins large puis, finalement, une tête 31b plus étroite et destinée à pénétrer aisément dans un boîtier 35 solidaire de l'une des extrémités d'une armature 36 du dossier du siège. Le boîtier 35 est constitué, d'un côté, par l'armature 36 légèrement évasée en 36a pour être conique et faciliter l'introduction de chaque poignard 20 et 31 et, par un couvercle 37 (fig. 11) qui comporte des pattes 38 rivetées sur la tôle constituant l'armature de dossier 36.

Comme dans le cas précédent, il est prévu une paire de trous oblongs 15 dont le rôle a été expliqué précédemment.

Le fonctionnement du montage est identique au cas précédent puisque, lorsque les poignards 31 sont fixés sur les parties mobiles des mécanismes 1 solidaires des armatures d'assise 32, travail réalisé au moment de la fabrication du siège, le deuxième poste de montage présente l'armature complète du dossier avec les boîtiers 35 qui viennent s'accrocher de part et d'autre de l'armature du dossier sur les poignards 31.

A la fig. 9, la pièce 23, 24 a la même forme déjà décrite.

Dans ce cas, l'introduction des poignards 31 dans les boîtiers 35 a pour effet de bloquer ces poignards dans les boîtiers par coincement des galets 24 comme déjà décrit dans le cas précédent.

41 désigne le petit ressort repoussant les axes 23 vers le bas car, dans le cas présent, le blocage s'effectue de haut en bas et non pas de bas en haut comme dans le cas précédent (voir fig. 1 à 7).

Il y a lieu de remarquer que, dans les deux cas, on peut aisément démonter les dossiers en comprimant, à l'aide d'un outil, les ressorts 25 et 41 afin de dégager les galets correspondants et ainsi libérer les poignards par rapport aux boîtiers. Ceci est obtenu en appuyant sur les extrémités lisses 23 sortant du boîtier 2.

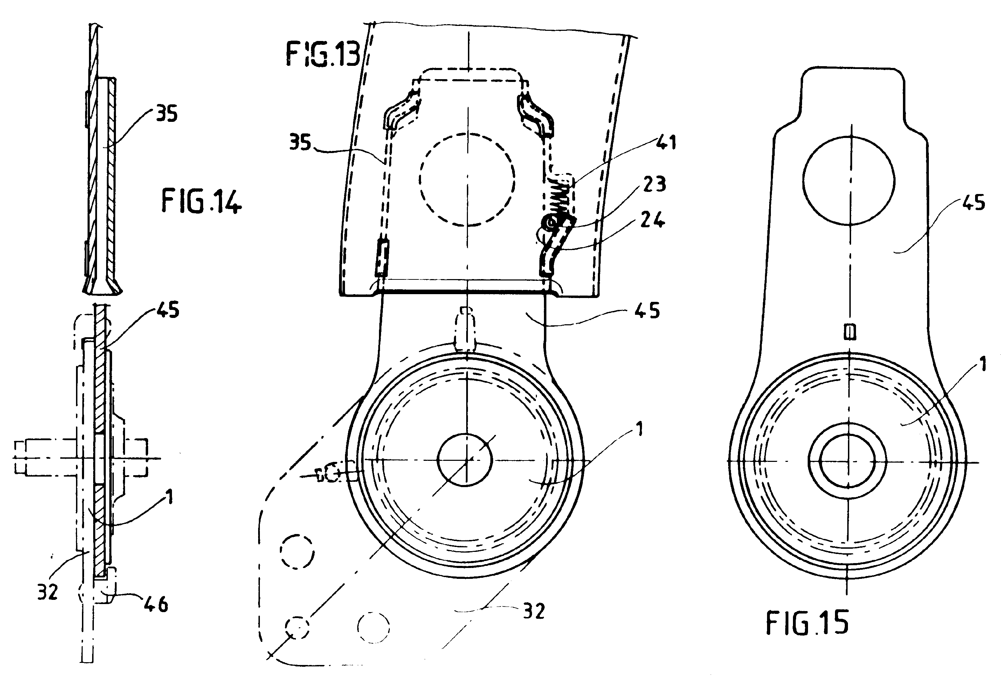

Les fig. 13, 14 et 15 montrent un poignard 45 qui constitue le flasque mobile des mécanismes d'articulation 1 de façon à limiter le nombre de pièces. Le montage de ce poignard dans les boîtiers 35 est identique à celui décrit pour les fig. 9 à 12, les références utilisées étant les mêmes.

Il y a lieu simplement de signaler que les poignards 45 sont maintenus sur la partie fixe 32 d'un mécanisme 1 de positionnement solidaire de l'assise d'un siège par des pions 46 couramment utilisés dans ce cas.

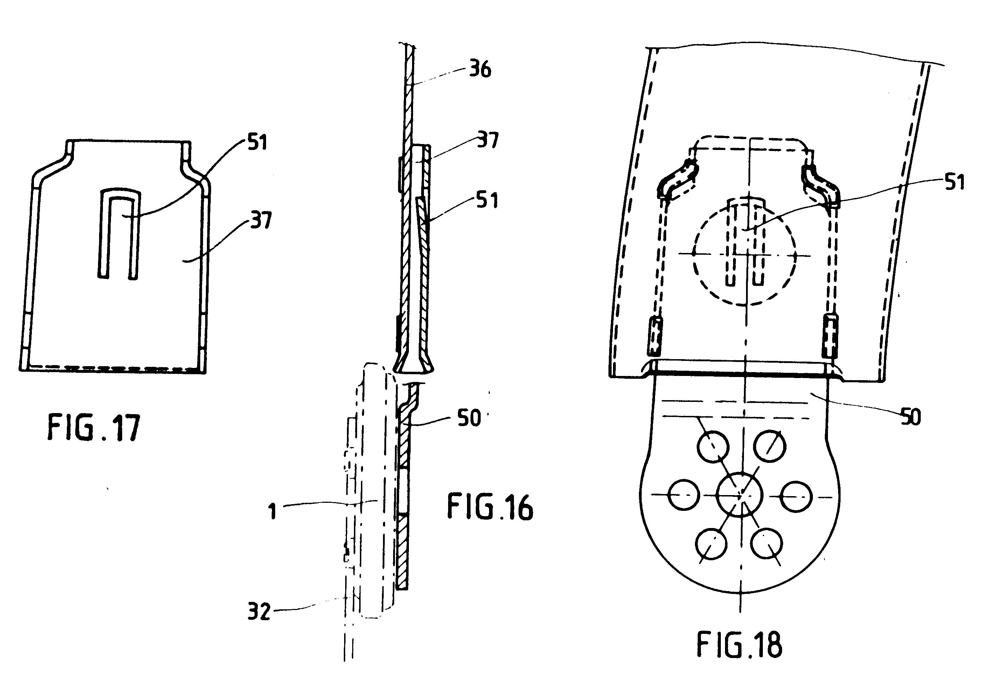

Finalement, les fig. 16 à 18 montrent le blocage de poignards 50 (montage identique à celui des fig. 9 à 12) par une lamelle 51 découpée convenablement dans la face latérale du couvercle 37. Dans ce cas, le galet 24 est supprimé puisque le verrouillage s'effectue par la lamelle 51.

Lorsque l'on a parlé de mécanismes permettant le réglage d'inclinaison du dossier par rapport à l'assise, il est entendu que ces mécanismes peuvent être de toutes sortes c'est-à-dire des mécanismes continus par trains épicycloïdaux, des mécanismes discontinus par grains ou même des mécanismes différents par coincement électromagnétique ou autres.

Comme le montre la description et quels que soient les cas envisagés aux fig. 1 à 18, il est donc possible aisément de séparer le dossier de l'assise considérée par un moyen simple qui est le décoincement des galets ou la déformation temporaire de la lamelle 51.

Dans certains cas et pour assurer une complète sécurité et un blocage parfait des deux éléments l'un par rapport à l'autre c'est-à-dire le dossier sur l'armature on est amené à modifier les dispositifs de liaison pour le positionnement d'assemblage et de blocage automatique ce qui va être décrit ci-après.

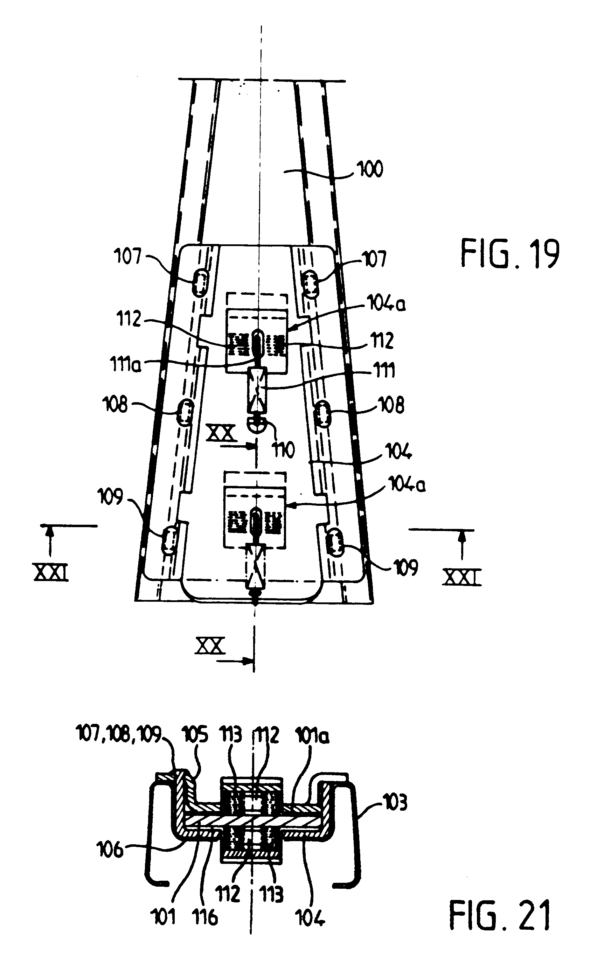

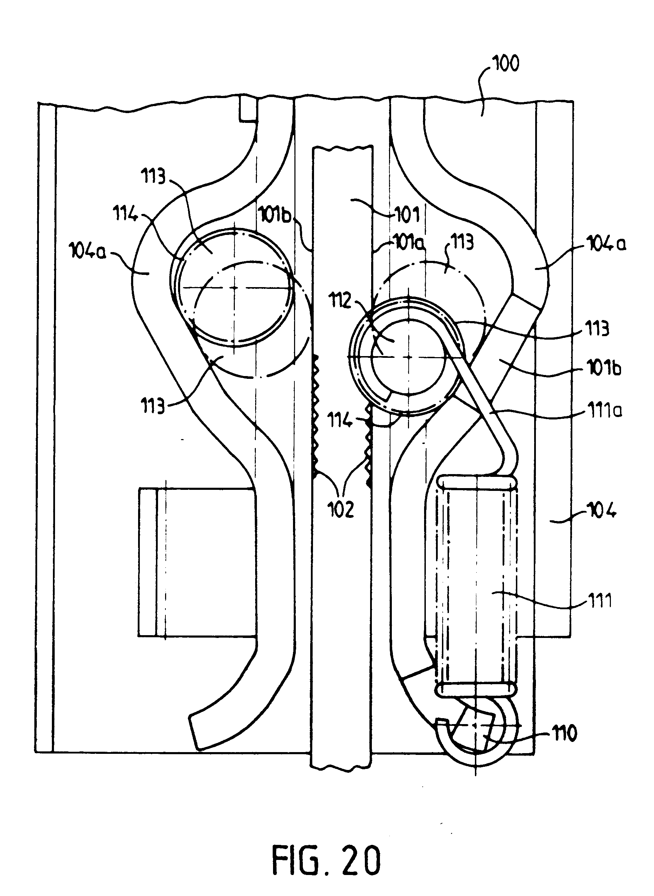

A la fig. 19, on a représenté d'une manière schématique l'armature 100 du dossier du siège considéré, cette armature n'étant figurée que par sa partie inférieure terminale. La partie inférieure solidaire de l'assise est une lame 101 plane presque trapézoïdale (voir fig. 20 et 21) qui présente sur ses faces opposées 101a, 101b des crantages 102.

L'armature 100 du dossier du siège porte un boîtier de forme sensiblement trapézoïdale 104 constitué par deux pièces 105, 106 réunies par soudure et/ou agrafées aux points 107, 108, 109. Ce boîtier présente comme cela est très visible à la fig. 20, deux zones renflées 104a, l'une à la partie supérieure et, l'autre à sa partie inférieure (voir fig. 19) ces deux zones renflées étant alignées l'une sous l'autre. Les bords du boîtier comportent des redents 110 pour assurer la fixation des ressorts spiraux 111. L'extrémité libre 111a de chaque ressort 111 est accrochée sur un tourillon 112 central de chaque galet strié 113 dont les stries 114 coopèrent avec les stries des crantages 102 de l'armature 101 de l'assise (voir fig. 20). Les ressorts 111 tendent du fait de leur disposition à abaisser les galets 113 vers le bas. Il est signalé que les extrémités 111a des ressorts 111 traversent la zone renflée 104a de chaque boîtier 104 par des ouvertures 116.

Il y a lieu de remarquer également à la fig. 20, qu'un seul ressort est représenté pour le galet strié 113, car l'autre galet strié 113, du côté gauche du dessin, se trouve placé en arrière et n'est donc pas visible. Un montage de l'ensemble s'effectue de la façon suivante : lorsqu'un boîtier 104 est en place sur l'un des côté de l'armature de dossier d'un siège (voir fig. 19) et que l'autre côté de l'armature de ce siège comporte également le même boîtier 104 symétriquement disposé, il suffit d'engager l'extrémité inférieure triangulaire de l'armature 100 du dossier de façon que l'extrémité d'armature 101 de l'assise vienne en butée sur la partie intérieure du boîtier 104. Les galets striés 113 en coopérant avec les crantages 102 de l'armature de l'assise 101 bloquent alors cette dernière du fait que les ressorts 111 tendent à faire descendre les galets 113 vers le bas en bloquant ainsi fermement l'armature du dossier sur l'armature de l'assise.

Pour le démontage du dossier il suffit de dégager les galets 113 en les ramenant vers le haut dans la zone renflée 104a pour libérer les crantages 102 des stries 114 des galets 113. Le dossier est alors libre.

Cette construction permet un montage rapide et sûr du dossier sur l'assise et ce travail peut donc être effectué sur machine automatique. De plus la conception simple mais efficace du coincement par galets striés assure un blocage sans jeu et une grande sécurité de la liaison du dossier avec le siège, ce d'autant plus que les renflements 104a sont à une distance suffisante l'un de l'autre.

## Revendications

1. Dispositif de positionnement et de blocage d'une armature de dossier de siège sur une armature d'assise de siège monté en automatique dans un véhicule dans lequel les extrémités arrière de l'armature de l'assise du siège considéré comportent des organes de fixation, caractérisé en ce que chaque organe de fixation qui peut être monté sur un mécanisme de réglage (1) de l'inclinaison du dossier est formé d'un boîtier (2) conformé pour recevoir un poignard (20) fixé à chacune des extrémités inférieures de l'armature du dossier, ce poignard (20) étant maintenu dans le boîtier (2) considéré par coincement à l'aide d'une pièce constituée par un galet (24) central strié en son centre et comportant latéralement des prolongements lisses de petits diamètres permettant au galet de tourner fou dans des ouvertures (15) prévues dans le boîtier (2) de façon à être repoussés par au moins un ressort (25) pour le coincement du galet dans chaque coin du poignard (20) et du boîtier (2) considérés.

2. Dispositif suivant la revendication 1, caractérisé en ce que le poignard (20) comporte à sa partie inférieure une ouverture allongée (22) permettant son introduction dans le boîtier (2) sans interférer avec l'arbre de rotation (21) du mécanisme d'inclinaison du siège.

3. Dispositif suivant l'une des revendications 1 et 2, caractérisé en ce que le boîtier (2) est monté sur l'armature de l'assise de part et d'autre du siège au moyen de rivets, de soudures ou de vis (10, 11, 12).

4. Dispositif suivant la revendication 1, caractérisé en ce que le poignard (31) solidaire de la partie mobile du mécanisme d'articulation (1) pénètre dans un boîtier (35) constitué par les extrémités de l'armature du dossier (36) et un couvercle (37) convenablement fixé sur le côté latéral interne de l'armature du dossier (36).

5. Dispositif suivant la revendication 4, caractérisé en ce que le poignard (31) est bloqué dans chaque boîtier (35) par l'intermédiaire d'un galet (24) à périphérie striée disposé fou dans le boîtier (2) et repoussé vers le bas par un ressort (41), l'axe (23) reposant dans des trous (15) percés dans le boîtier (35) et l'élément du dossier de siège.

6. Dispositif suivant la revendication 1, caractérisé en ce que le poignard (45) constitue le flasque mobile du mécanisme d'articulation (1).

7. Dispositif suivant la revendication 1, caractérisé en ce que le blocage du poignard (50) s'effectue à l'aide d'une lamelle (51) prédécoupée dans le couvercle (37) formant le boîtier (35).

8. Dispositif de positionnement d'assemblage et de blocage automatique d'une armature de dossier sur une armature d'assise d'un siège dans lequel les deux extrémités de l'armature (100) du dossier du siège comportent chacune un boîtier (104) de forme sensiblement trapézoïdale, caractérisé en ce que ces boîtiers (104) comportent, à deux emplacements superposés et alignés, des renflements (104a) destinés chacun à contenir un galet strié (113) présentant en leur centre un tourillon central (112) permettant l'accrochage d'une des extrémités d'un ressort de rappel (111) dont l'autre extrémité est fixe sur un redent (110) prévu à la partie inférieure des boîtiers (104), ces boîtiers assemblés recevant par introduction verticale les extrémités inférieures de l'armature du dossier constituées par les lames (101) de forme sensiblement trapézoïdale et présentant sur leur grandes faces opposées des stries (102) coopérant avec les galets (113).

9. Dispositif suivant la revendication 8, caractérisé en ce que les ressorts (111) sont des ressorts de traction.

10. Dispositif suivant la revendication 8, caractérisé en ce que les deux pièces (105, 106) formant chaque boîtier (104) sont fixées l'une à l'autre par tout moyen convenable.

## Patentansprüche

1. Vorrichtung zum Einstellen und Blockieren eines Sitzrückenlehnengestells auf einem in einem Fahrzeug automatisch befestigten Sitzgestell, bei welchem die hinteren Enden des betrachteten Sitzgestells Fixierorgane aufweisen, dadurch gekennzeichnet, daß jedes Fixierorgan, das auf einem Einstellmechanismus (1) für die Neigung der Rückenlehne montiert sein kann, aus einem Gehäuse (2) besteht, welches derart ausgebildet ist, um ein Flachstück (20) aufzunehmen, das an jedem der unteren Enden des Sitzrückenlehnengestells befestigt ist, wobei dieses Flachstück (20) im betrachteten Gehäuse (2) durch Klemmung mit Hilfe eines Stückes gehalten ist, das aus einer mittigen Rolle (24) gebildet ist, die der Mitte gerillt ist und seitlich ebene Verlängerungen mit kleinem Durchmesser aufweist, die es der Rolle gestatten, sich frei in Öffnungen (15) zu drehen, die im Gehäuse (2) vorgesehen sind, wobei die Rolle durch zum indest eine Feder (25) zur Klemmung der Rolle in jedem Winkel des Flachstückes (20) und des betrachteten Gehäuse (2) beaufschlagt wird.

2. Vorrichtung nach Anspruch 1, dadurch gekennzeichnet, daß das Flachstück (20) in seinem unteren Abschnitt eine längliche Öffnung (22) aufweist, die seine Einführung in das Gehäuse (2) gestatten, ohne mit der Drehwelle (21) des Mechanismus zur Neigung des Sitzes zu interferieren.

3. Vorrichtung nach einem der Ansprüche 1 und 2, dadurch gekennzeichnet, daß das Gehäuse (2) auf beiden Seiten des Sitzes am Sitzgestell mittels Nieten, Verschweißung oder Schrauben (10, 11, 12) angebracht ist.

4. Vorrichtung nach Anspruch 1, dadurch gekennzeichnet, daß das mit dem beweglichen Teil des Gelenkmechanismus (1) verbundene Flachstück (31) in ein Gehäuse (35) eindringt, welches durch die Enden des Rückenlehnengestells (36) und einen Deckel (37) gebildet ist, der in herkömmlicher Art an der Innenseite des Seitenteils des Sitzlehnengestells (36) befestigt ist.

5. Vorrichtung nach Anspruch 4, dadurch gekennzeichnet, daß das Flachtück (31) in jedem Gehäuse (35) mittels einer Rolle (24) mit gerilltem Umfang blockiert ist, die lose im Gehäuse (2) vorgesehen und nach unten hin durch eine Feder (41) beaufschlagt ist, wobei die Achse (23) in Löchern (15) gelagert ist, die im Gehäuse (35) und dem Element der Rückenlehne des Sitzes ausgenommen sind.

6. Vorrichtung nach Anspruch 1, dadurch gekennzeichnet, daß das Flachstück (45) den beweglichen Flansch des Gelenkmechanismus (1) bildet.

7. Vorrichtung nach Anspruch 1, dadurch gekennzeichnet, daß die Blockierung des Flachstückes (50) mit Hilfe einer Lamelle (51) durchgeführt wird, die im das Gehäuse (35) bildenden Deckel (37) vorausgeschnitten ist.

8. Vorrichtung zum Einstellen der Anordung und zum autamatischen Blockieren eines Sitzrückenlehnengestells, auf einem in einem Fahrzeug automatisch befestigten Sitzgestell, bei welchem die beiden unteren Enden des Sitzrückenlehnengestells (100) jede ein Gehäuse (104) von im wesentlichen trapezoider Form umfassen, dadurch gekennzeichnet, daß diese Gehäuse (104) an zwei übereinander liegenden und in einer Linie befindlichen Stellen Ausbauchungen (104a) umfaseen, die beide dazu bestimmt sind, je eine gerillte Rolle (113) aufzunehmen, die in ihrem Zentrum einen zentralen Zapfen (112) aufweisen, der das Einhängen eines Endes einer Rückholfeder (111) gestattet, deren anderes Ende an einem im unteren Abschnitt des Gehäuses (104) vorgesehenen Vorsprung (110) befestigt ist, wobei die zusammengesetzten Gehäuse die unteren Enden des Sitzrückenlehnengestells durch vertikales Einführen aufnehmen, die durch im wesentlichen trapezoide Zungen gebildet sind, die an ihren einander gegenüberliegenden Breitseiten Rillen (102) aufweisen, die mit den Rollen (113) zusammenwirken.

9. Vorrichtung nach Anpsruch 8, dadurch gekennzeichnet, daß die Federn (111) Zugfedern sind.

10. Vorrichtung nach Anspruch 8, dadurch gekennzeichnet, daß die beiden Stücke (105, 106), welche jedes Gehäuse (104) bilden, miteinander durch herkömmliche Mittel verbunden sind.

## Claims

1. Positioning and blockage device of a seat back frame on a seat base frame mounted automatically in a vehicle in which the rear ends of the seat base frame of the seat in question include fixation members, characterized in that each fixation member which can be mounted on a mechanism (1) for setting the inclination of the seat back is formed of a casing (2) so shaped to receive a dagger (20) fixed to each of the lower ends of the seat back frame, this dagger (20) being held within the casing (2) in question by being wedged with assistance of a part made of a centrally serrated central roller (24) and laterally comprising smooth extensions of smaller diameters enabling the roller to rotate freely in openings (15) formed in the casing (2) in order to be pushed back by at least one spring (25) for the wedging of the roller in each corner of the dagger (20) and of the casing (2) in question.

2. Device according to claim 1, characterized in that the dagger (20) comprises, at its lower portion, an elongated opening (22) enabling its introduction into the casing (2) without interfering with the rotation shaft (21) of the mechanism for the inclination of the seat.

3. Device according to one of claims 1 and 2, characterized in that the casing (2) is mounted on the seat base frame on either side of the seat by means of rivets, weldings or screws (10, 11, 12).

4. Device according to claim 1, characterized in that the dagger (31) which is rigidly connected to the mobile portion of the articulation mechanism (1) penetrates into a casing (35) formed by the ends of the seat back frame (36) and a lid (37) suitably fixed on the inner lateral side of the seat back frame (36).

5. Device according to claim 4, characterized in that the dagger (31) is blocked inside each casing (35) via a roller (24) having a serrated periphery and freely mounted in the casing (2) and pushed back downwardly by a spring (41), the pin (23) bearing inside holes (15) pierced in the casing (35) and the seat back element of the seat.

6. Device according to claim 1, characterized in that the dagger (45) forms the mobile flange of the articulation mechanism (1).

7. Device according to claim 1, characterized in that the blockage of the dagger (50) is provided with assistance of a small blade (51) pre-cut in the lid (37) forming the casing (35).

8. Automatic assembly positioning and blockage device of a seat back frame on a seat base frame of a seat, in which the two ends of the seat back frame (100) of the seat each comprises a casing (104) of substantially trapezoidal shape, characterized in that these casings (104) include, at two superimposed and aligned positions, bulging portions (104a) each adapted for containing a serrated roller (113) having centrally a central journal (112) for the hooking of one of the ends of a return spring (111) the other end of which is fixed on to a step (110) provided at the lower portion of the casings (104), these casings receiving, in an assembled state and by a vertical introduction, the lower ends of the seat hack frame made of the blades (101) of substantially trapezoidal shape and having opposite large faces provided with serrations (102) cooperating with the rollers (113).

9. Device according to claim 8, characterized in that the springs (111) are traction springs.

10. Device according to claim 8, characterized in that the two parts (105, 106) forming each casing (104) are fixed together by any convenient means.

FIG.1

20

21

24

23

25

1

2

FIG.4.    FIG.5    FIG.6

8a    8a    8a

10

11

12

8    8    8

1a    1a    1a

FIG.8

FIG.8a

FIG.9

EP 0 368 761 B1

FIG 10

36

38    37

38    35

38

36a

1    31

32

FIG.11

37

15

38

FIG.12

31b

31a

31

33

34

EP 0 368 761 B1

FIG.14

FIG.13

35

41

23

24

45

45

1

32

FIG.15

45

1

32

46

1

35

EP 0 368 761 B1

FIG.18

FIG.16

FIG.17

FIG. 19

FIG. 21

FIG. 20